# EUROPEAN PATENT APPLICATION

(11) **EP 2 199 902 A1**
(43) Date of publication of application: **23.06.2010**
(21) Application number: 08380342.9
(22) Date of filing: 19.12.2008
(51) Int. Cl.: G06F 9/44, G06F 9/445

(54) **Personalized, automated modification method and system for software applications and contents**

(71) Applicant: Babeldreams S.L., 37188 Carbajosa de la Sagrada, Salamanca (ES)
(72) Inventor: Navarro-Cañadas, José Manuel, Valladolid (ES); Lanchares Sánchez, Jaime, Salamanca (ES); López Luis, Félix, Salamanca (ES)
(74) Representative: Lorente Berges, Ana

(57) **Abstract**

A system and method for providing modification of software applications and contents, without human intervention, during the transmission process in a network, which system comprising: an application and content server electronically connected to a network, a client electronic device in electronic communication with a network and being able to request for downloading of a client software application and contents, a client software application and contents which are characterized by being capable of being run in an electronic device, a proxy, filter or gateway electronically connected to a network through which client applications and its contents pass during transmission thereof to the client electronic device, a networked application for modification of client software applications and their contents electronically connected to the corresponding proxy, filter or gateway, corresponding to the present invention and characterized by being configured to detect, intercept and modify client software applications and their contents, keeping the compatibility of said client application and the contents with the client electronic device, a database server or electronic data store where the modifying application configuration for client applications is stored and optionally a database server or electronic data store where information of the results of the modifications, updates and/or personalizations performed by the modifying application for client applications is stored.

## Description

### Field of the invention

The present invention relates to the field of personalized, automated modification systems and methods for software applications and contents, as applicable to networks and systems for distributing and delivering software applications and/or contents to end user devices. More particularly, the invention relates to such systems and methods as applicable to application and/nr contents distribution systems wherein the software application and/or contents delivery is performed after manual or automated events requesting for each respective software application or contents, and before the corresponding end user receiving the requested application and/or contents.

### Background of the invention

Devices for transmitting and downloading client applications, in the form of videogames, messaging systems, personal organizers, management applications, business applications, operating system updates, enhancements and/or bug corrections over software already setup, etc., have evolved from computers to various electronic apparatus, with the mobile phone being the most representative of them- Those applications are usually provisioned in application, content and download servers so that they can be downloaded to devices by device users through network-based electronic transmission systems.

The growth of client applications to be downloaded to user devices is mainly due to mobile phone and wireless networks expansion, and at the same time this has made logistics and maintenance difficult for these networks to a great extent. Telecommunication operators having large application inventories to be downloaded, such as videogames, need not only provision the games, but also demo versions for said videogames and they must request certain modifications to the applications from application developers in order to adapt them to specific cases. This implies a human cost for developing personalized software in many versions and for many devices, including a large number of teats, which makes maintenance highly expensive and complicated.

Another significant example can be appreciated relating to Mobile Marketing launch, which is an adaptation of the on-line marketing system for mobile devices and has appeared in the market short time ago. Marketing agencies need to insert advertising for their client's campaigns into applications downloaded to mobile devices, which makes it necessary to manually adapt those applications and falling in undue expenses and complexity for a proper development of said marketing system.

Finally, apparition of digital content and application advanced users, commonly called "digital natives", has started to change the client software application overview. This change has arisen due to said users requesting for the possibility of adapting and personalizing contents and client applications to be downloaded, in the same manner as they adapt cars or modify their clothes, This requirement forces the industry to find affordable economic mechanisms for the users being able to personalize mobile contents and applications in a way suitable to their social habits.

The need to personalize and adapt contents and applications for customers by different kinds of companies such as telecommunications operators, software application developers, marketing agencies, etc., is obvious in the market. For these companies to be able to modify applications and contents in a personalized way with affordable expenses, it is necessary to use an automatic system capable of being previously configured and of being adapted according to the configuration and medium where said application and their contents are run, before they reach the user device.

Examples of publicly disclosed systems can be mentioned in rotation to the prior art.

Spanish patent, publication no. ES2302587, discloses an 'automatic configuration and personalization system and method for mobile devices' wherein configuration data updating for SIM cards accommodated in corresponding mobile devices is provided. Such a system only concerns mobile devices and respective SIM cards. Moreover, data updating occurs upon inserting the SIM card into the mobile device. No fully automated updates and personalizations (generally modifications) are mentioned, nor generally in relation to signal sending from the server (that is, without having to manually insert the SIM card). In addition, said system doesn't take into consideration various user devices such as videogame consoles, computers or, e.g., set top boxes, which can be integrated in the network infrastructure.

Spanish patent, publication no. ES2198198, describes a 'personalization system for applications in a SIM or USIM card of a mobile terminal'. As in the previous case, this system is limited to the mobile terminal environment, more specifically mobile terminals with embedded SIM or USIM cards. Also, in order to receive the personalizatione it is necessary an active interaction by the user with a graphic interface provided by the system and accessed by the user through a further device, e.g., a computer.

US 2001/0014895 A1 relates to a "method and apparatus for dynamic software customization" wherein a document presentation is customized depending on each user's personal attributes (e.g., male or female, race, age, etc.) so that said document becomes friendlier to the person receiving it. The user must manually enter this data and further the invention is only limited to user personal attributes such as those above mentioned. There is reference to neither customer personal preferences nor technical configurations for the user device software or hardware, and it is not either mentioned said electronic documents being software applications.

Patent WO 2005/111851 A2 shows an invention entitled "Rules framework for definition and execution of end-user rules logic" wherein a platform for personalizing end user software is provided and in which the way to perform said personalization is through programming conducted by the user himself, as the document itself states ('The way to accomplish this is by allowing the end-user to "program" the behaviour of their computer.').

Hence, there exists a need for a method and a related system for modifying software applications and contents, applicable to most existing systems intended to distribute applications and contents to end users, wherein said applications and contents can be modified in a way completely automated, personalized and imperceptible for each device belonging to the system, without said user who receives the actual application or content having to send even a modification (updating, personalization, etc.) command.

Therefore, the present invention intends to provide an automated, personalized modification method and system for applications and contents such that modification thereof without involving human developers and according to end user features and preferences and/or to sending entity's business and technical schedules is facilitated, thus providing both economic and time savings on said modifications.

### Disclosure of the invention

To this aim, an object of the present invention is an automated, personalized modification method for software applications and contents, as applicable to networks and systems for distributing and delivering software applications and/or contents to end user devices. In such a method, modification criteria and elements for requested software applications and/or contents are occasionally and/or periodically stored into a modification criteria and element database connected to the distribution system and which can also be included therein. Before delivering the delivery signal to the corresponding user device:
- intercepting and analysing said delivery signal to make a decision whether the application and/or content included therein must be modified before delivering them to the requesting user device; the decision is based on the above mentioned modification criteria;
- if the decision is made to modify the application and/or content, then proceeding to modifying thereof with the modification elements corresponding to the previously used modification criteria;
- checking or comparing the modified application and/or content against previous results stored into a result database to determine possible incompatibilities, for said modified application and/or content, with respect to the user device requesting them;
- if no incompatibility is determined in the previous comparison, sending then the delivery signal with the modified application and/or content to the requesting user device; if any incompatibility is determined, sending the requesting user device the delivery signal with the unmodified application and/or content: and finally,
- storing into the result database possible incompatibility or operation error responses for the delivered application and/or content, with said responses being sent by the requesting user device once it has received and tried the requested application and/or content.

According to a further characteristic of the present invention, the modification criteria used for making a decision on the modification of the software applications and contents comprise: marketing, advertising, business criteria and the like; statistical profile criteria about requesting end users in accordance with visited web sites, accessed contents or applications, geographical location, user sex and age, and the like; technical criteria for updating and/or improving software application and content versions; personalization criteria for the software applications and contents in accordance with requirements expressly entered into the system by the user in question; criteria for improving energy consumption in accordance with the type of application and/or content.

In accordance with a further characteristic of the present invention, the steps wherein the delivery signal including the requested software application and/or content is intercepted, analysed, modified and checked are performed in one or more of a proxy, a gateway, and a filter of the software application and contents distribution system.

Still according to further characteristic of the present invention, the steps for intercepting, analysing, modifying and checking the delivery signal comprising the requested software application and/or content are performed in a module included in the software application and content server of the system, and/or connected to said server.

Another characteristic of the present invention is that the event through which the request for the software applications and/or content is generated is manually or automatically triggered by a user device on behalf of the device itself or of a set of target user devices arranged to receive the respective applications and/or contents.

An additional characteristic of the present invention refers to the fact that the request event mentioned in the above paragraph is triggered by the application and content server of the distribution and delivery system.

Another object of the present invention is an automated, personalized modification system for software applications and contents, as applicable to networks and systems for distributing and delivering software applications and/or contents to end user devices. Said modification system comprises:
- at least one modification criteria and element database;
- analysing means for the delivery signal in connection with this modification criteria and element database; these means are arranged to intercept and analyse the delivery signal before delivering thereof to the respective user device or devices, such that said analysis makes a decision whether the applications and/or contents included in said signal are to be modified based on the modification criteria in the modification criteria and element database; further, the analysing means are arranged to report whether modifications must be performed or not to modifying means in an indicating signal;
- modifying means for the delivery signal in connection with said analysing means and which can also be included therein, and moreover in connection with the modification criteria and element database; said modifying means are arranged to modify, upon receiving an indicating signal that modifications must be performed, the applications and/or contents included In said delivery signal, before delivering thereof to the respective user devices; modifications are based on corresponding modification elements in the modification criteria and element database, and said modifying means are also arranged to store information about said modification results into a result database;
- at least one result database arranged to store i) information about results of modifications performed on applications and/or contents, and ii) information about incompatibility or operation error responses sent by user devices receiving modified software applications and/or contents;
- examining means for modifications in connection with the modifying means and which can also be included therein, and additional in connection with the result database; these examining means are arranged to determine possible incompatibilities (which can arise in modified applications and/or contents) with respect to the requesting user devices.

According to one characteristic of the present invention, the modification criteria and element database for software applications and contents is arranged to store modification criteria comprising: marketing, advertising, business criteria and the like; statistical profile criteria about requesting end users in accordance with visited web sites, accessed contents or applications, geographical location, user sex and age, and the like; technical criteria for updating and/or improving software application and content versions; personalization criteria for the software applications and contents in accordance with requirements expressly entered into the system by the user in question; criteria for improving energy consumption in accordance with the type of application and/or content.

According to a further characteristic of the present invention, the analysing means for the delivery signal, the modifying means for the delivery signal, the examining means for modifications, the modification criteria and element database and the result database are connected to one or more of a proxy, a gateway, and a filter of the software application and contents distribution system, and further they can also be included in one or more of the above mentioned elements.

In accordance with an additional characteristic of the present invention, the analysing means for the delivery signal, the modifying means for the delivery signal, the examining means for modifications, the modification criteria and element database and the result database are connected to the software application and content server of the distribution system, and they can also be comprised in said server.

Still according to a further characteristic of the present invention, the analysing means for the delivery signal, the modifying means for the delivery signal, the examining means for modifications, the modification criteria and element database and the result database are arranged to process delivery signals comprising software applications and/or contents requested through a request event. This request event can be manually or automatically triggered by a user device on behalf of the device itself or of a set of target user devices arranged to receive the respective applications and/or contents.

Additionally, a further characteristic of the present invention refers to the fact that the analysing means for the delivery signal, the modifying means for the delivery signal, the examining means for modifications, the modification criteria and element database and the result database are arranged to process delivery signals comprising software applications and/or contents requested through a request event triggered by the application and content server of the distribution and delivery system.

Finally, another characteristic of the present invention is that the user devices comprise mobile phones, PDA devices, videogame consoles, smart phones, multimedia players, computers, and set-top boxes.

It will be appreciated by those skilled in the art that the characteristics herein set forth, associated with corresponding aspects of the method and system of the present invention, optimize the modification, update and personalization of software applications and contents by said modifications being fully automatically performed during the continuing request and delivery process of the corresponding application or content, with the result of saving in time and human resources, and without said actions being noticeable by the end user who will receive the requested application or content.

### Brief description of the drawings

Embodiments of both the system and the method subject of the invention and a graphic exemplifying the prior art are illustrated in the accompanying drawings by way of non-limiting example. In the drawings:
Fig. 1 is a simplified high-level diagram showing a standard system for delivering applications and contents to one or various user devices (videogame console, PDA, electronic personal organizer, smart phone, laptop, desktop computer, etc.);
Fig. 2 is a simplified high-level diagram showing the application and content delivery system in the Fig. 1 and illustratively including the application and content modification system of the present invention;
Fig. 3 corresponds with a high-level diagram of possible components which may form a part of one preferred embodiment of the modification system of the present invention; and
Fig. 4 is a high-level flow chart according to one embodiment of the method of the present invention also corresponding with the modification system in Figs. 2 and 3.

### Detailed description of the drawings

The present invention provides systems 1 and methods for modifying and/or updating applications and contents during their transmission to an electronic device 4 through a network. The invention doesn't depend on how the application and content request is started, whether through an action generated by a user or through an automatic event launched by a device, as it is set forth in both the different system and method claims. Likewise, it doesn't depend on the requesting mechanism, for instance, by sending an SMS or MMS message, by browsing to a collection, by receiving a wap push message, by utilizing a link In an e-mail, by utilizing a collection stored in device memory, etc. Further the present invention starts functioning when the application and content server 3 of system 2 through any means or mechanism receives a request for downloading an application and/or contents via an electronic network to one or more user devices 4.

In the following, the invention will be described in detail with reference to the accompanying illustrations, wherein the most common embodiments of the invention are showed.

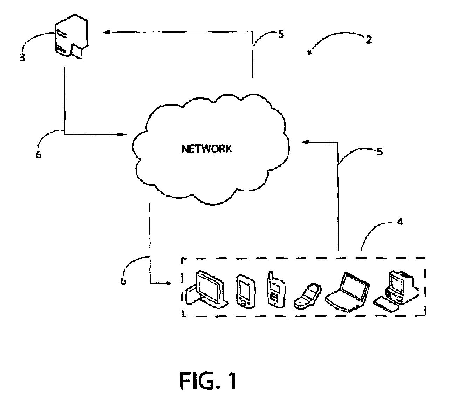

More specifically, for introductory purposes, figure 1 shows a general system 2 for distributing and delivering software applications and contents to user devices 4. Such a system 2 is provided simplified in this figure and it only shows the base portions required for understanding the application context of the present invention. Thus, various user devices 4 (mobile phones, PDAs, computers, etc...) can be recognized in the illustration, connected to a network infrastructure which is a part of the distribution system 2 having also an application and content server 3. Basically, after receiving a request for a software application and/or content, server 3 determines whether said application or content ran be delivered and, if so, it sends them to the end user device or devices 4. As understood by those skilled in the art, both the signal carrying the request and the return signal carrying applications and contents can undergone different analogue and digital processing and handling common in the art. Said handling, including identity authentication or verification of user devices 4, data packing and compressing/unpacking and expanding, signal encryption, etc., are not essential to understand the applicability of the present invention, and its different variations in the various existing distribution systems 2 don't influence said applicability. Therefore, for ease of understanding the embodiments set forth herein, the above mentioned handling description is omitted.

It is important to note that the terms "modification", "modify" and its possible variations relating to software applications and contents are intended to mean any change as performed on the corresponding software application and contents, requested by respective user devices 4, including, but not limited to, updates to higher versions, improvements for applications and contents already in use, code debugging patches, software and contents personalization based on the target user device 4 and the like.

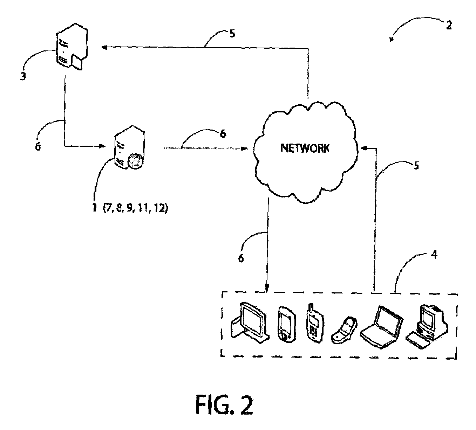

Figure 2 depicts a diagram of distribution and delivery system 2 for software applications and contents in the figure 1 with the modification system 1 of the present invention added. As seen in the figure, system 1 is attached somewhere in the path of the delivery signal 6 from application and content server 3 to the one or more end user devices 4, and also said system 1 may be included in part or entirely in the application and content server 3 itself in one of the embodiments of the present invention. In figure 2 it can also be seen schematically a request signal 5 for a software application and/or content which is originated here in a requesting user device 4 and terminating in the application server 3. This request signal 5 may be created by a manual or automatic request event triggered in the requesting user device 4 itself, or it can be created by the system 2 itself, also manually or automatically, in the application and content server 3 for instance, or in any other portion of system 2 capable of connection with said server 3 to send it the request 5. The important thing for the applicability of the present invention is that a delivery signal 6 is created in system 2, which includes software applications and/or contents addressed to user devices 4.

Continuing still with figure 2 and the focus of the disclosure being the delivery signal 6, this signal is intercepted by system 1 which includes in the preferred embodiment of the invention:
- at least one modification criteria and element database 7 intended to store I) modification criteria based on which it will be determined, through analysing means 8 which are a part of the system 1, whether or not the application and/or contents included in the delivery signal 6 are to be modified by system 1, and II) modification elements which will be used by system 1 to modify the corresponding application and contents if it is determined by analysing means 8 that said modification must be performed. Such modification elements are typical add-ons for software applications and contents concerning both the code and the display part (visual, audio, touch-sensitive elements, etc.): they can be code portions intended to update, improve or personalize programs or applications, debugging patches for bugs in previous versions, code intended to include Into the requested application and/or content advertising campaign presentations, interface personalizations, changes for the purpose of improving the energy consumption (mainly regarding portable user devices 4 wherein the battery duration is critical) or game scenes with components representative of the respective end user (e.g., pictures of the user himself/herself, narrative text altered according to user features, etc.), and the like or combinations thereof. It must be pointed out that the modification criteria and element database 7 can be updated periodically and/or automatically (e.g., with advertising campaigns, version updating, etc.) in connection with the application server 3 for instance, or it can be manually updated, e.g., on demand by a related end user, to load into said database 7 covers, pictures, tunes, etc., with which the user wants the system 1 to personalize the requested application or content;
- above mentioned analysing means 8 for the delivery signal 6 which, as inferred from the above text explaining its aim, are connected to the modification criteria and element database 7; more precisely, said means 8 are arranged to intercept and analyse said signal 6 before delivery thereof to the related user device or devices 4;
- modifying means 9 for the delivery signal 6 in connection with, and optionally included in, said analysing means 8, and also in connection with the modification criteria and element database 7; such modification means 9 are in charge of putting into practice, with the modification elements in database 7, those modifications or changes that have been determined by the analysing means 8 based on the modification criteria also stored in the database 7. Their task is also storing information on said modifications results into a result database 11; such results are provided by examining means 12 which will be described later with more detail;
- at least one result database 11 wherein I) information on modification results, and II) information on incompatibility or operation error responses sent by user devices 4 which are receiving modified software applications and/or contents are stored. The results of the modifications are essentially sent by examining means 12 connected to the database 11 and whose function is determine possible incompatibilities for the software applications and/or the contents modified with respect to the target user devices 4: occasionally, once the required modifications on the requested application and content are effected, it is found that the new application and/or content deprived after the modification is not compatible with the requesting user device 4, and said incompatibility is stored into the database 11 for ease of further examination in correspondence with additional requests. Moreover, the incompatibility or operation error responses are usually sent by user devices 4 automatically which, upon starting the corresponding application and/or content, detect said failure (similarly to feedback messages generated by various widely extended computer applications of common use);
- modification examining means 12 in connection with, and optionally included in, the modifying means 9. As just explained above, these means 12 are also arranged, in connection with the result database 11, to determine possible incompatibilities for the modified applications and/or contents.

It should be noted that the way of carrying out the various execution 8, 9, 12 and storing 7, 11 means just above described is well known for those skilled in the art. In order to put into practice the same, software, hardware and different combinations thereof as data media (memories, hard disks, etc.,...), processors, servers, communication adapters, etc., can be used. Likewise, these means 7, 8, 9, 11, 12 may be integrated in a single unit or module, or they can be combined in different units, as an example, the examining means 12 and the result database 11 could be integrated in a single unit for production and marketing reasons. Any modular combination is possible as long as the means 7, 8, 9, 11, 12 herein described can be unambiguously differentiated within system 2 (whether the reason is they are located in different physical media or defined by programs or code portions clearly separate although connectable to other different programs or code portions).

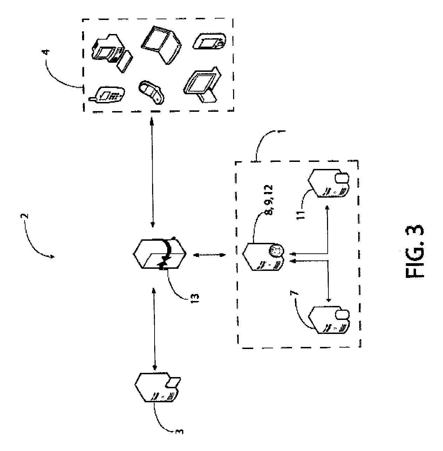

As for this issue, it should be noted that system 1 can be also Included in the application and content server 3 itself. That is, new distribution and delivery systems 2 implemented from now on can add the system 1 of the present invention to the same physical location as the server 3. In further embodiments, the system 1 can be physically located, in part or entirely, in any node being a part of the path of delivery signal 6 from server 3 (or from other means in system 2 which perform the functions typical from said server 3 herein described) to the end user device or devices 4. As exemplary intermediate nodes, a proxy, a filter, and a gateway 13 can be mentioned without limitation thereto. This is illustrated with more detail in figure 3 wherein, by way of example, only that portion of system 2 corresponding to signal exchange between the server 3 and user devices 4 is shown. In said figure, it is illustrated a node 13 (filter, proxy, or gateway) to which is connected the system 1 of the present invention. System 1 could be in the same physical location as node 13 in the same manner as described for application server 3. Modular partition of system 1 shown in figure 3 (means 8, 9, 12 - database 7 - database 11) is also illustrative and its portions can be clustered differently as set forth above.

As second, independent aspect of the present invention, it is shown now a method for modifying (updating, personalizing, improving, etc.) software applications and/or contents applicable to a delivery and distribution system 2 for applications and contents.

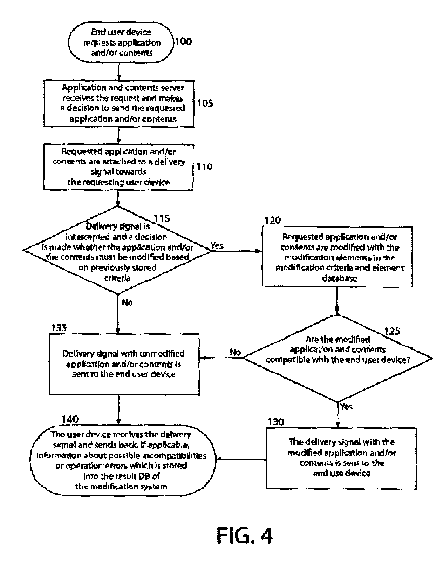

The method of the present invention is depicted essentially in a flow chart in figure 4, and it corresponds with the modification system 1 herein just described. More precisely, a request for an application and/or content stored in application and content server 3 occurs in step 100. Although the request is sent by a user device 4 in this example, alternative embodiments of the invention allow requests automatically or manually sent by further elements of system 2. Application and content server 3 receives the request and makes a decision 105 whether to send the requested application and/or contents. If server 3 decides that said application and/or contents can be sent to the requesting user device 4, they are attached 110 to a delivery signal 6 in a manner well known in the art (packing, compression, encryption, etc.). Signal 6 is intercepted and analysed 115 by means 8 which make a decision whether to include or not (steps 120 or 135 respectively) modifications into the included application and/or contents. If it is decided that no modification must be performed, signal 6 is sent 135, together with respective application and/or contents, to the corresponding user device or devices 4. Contranly, it it is decided that the application and/or contents in question can take modifications, they are carried out 120 and the modified application and/or contents with respect to target user devices 4 are checked for compatibility. If the new application and/or content are compatible, they are sent 130 to the requesting user device 4; otherwise, the sequence proceeds to the above mentioned step 135. Finally, the user device or devices 4 receiving 140 the requested software applications and/or contents send back response signals about possible detected incompatibilities or operation errors.

Once sufficiently described the nature of the present invention, together with one way of putting it into practice, it must be said that everything not altering, changing or modifying its essential principle, can be subjected to variations in detail. For instance, kinds of devices, forms of communication, and forms of implementation of the various media of the described embodiment can be varied as long as said variations or modifications don't affect essential aspect disclosed in the accompanying claims.

## Claims

1. Automated, personalized modification method for software applications and contents, as applicable to networks and systems (2) for distributing and delivering software applications and/or contents to end user devices (4) after manual or automated request events (100) for each respective software application or content, which comprises, based on criteria defined in system (2), automatically modifying said respective software application or content to be delivered to an end user or users, comprising said method the steps of:
- sending (100) by at least one user device (4) a request for a software application and/or content to an application and content server (3) of said distribution system or network (2);
- receiving (105) the request and making a decision (105), by the application and content server (3), whether to send or not the requested application and/or content to the user device (4);
- if the server (3) makes a decision (105) to send the requested application and/or content, they are attached (110) to a delivery signal (6) terminating in the requesting user device (4); and
said method being **characterized in that** modification criteria and elements for requested software applications and/or contents are occasionally and/or periodically stored into a modification criteria and element database (7) connected to, and optionally included in, the system (2) and **in that** before delivering (130, 135) the delivery signal (6) to the corresponding user device (4):
- intercepting and analysing (115) said delivery signal (6) to make a decision whether the application and/or content included therein must be modified before delivering them to the requesting user device (4), with said decision based on the above mentioned modification criteria;
- if the decision is made to modify the application and/or content, proceeding to modifying (120) thereof with the said modification elements corresponding to the previously used modification criteria;
- checking (125) the modified application and/or content against previous results stored into a result database (11) to determine possible incompatibilities, for said modified application and/or content with respect to the user device (4);
- if no incompatibility is determined, sending (130) the delivery signal (6) with the modified application and/or content to the requesting user device (4); otherwise, if any incompatibility is determined, sending (135) the requesting user device (4) the delivery signal (6) with the unmodified application and/or content; and
- storing (14) into the result database (11) possible incompatibility or operation error responses for the delivered application and/or content, being sent by the requesting user device (4) once it has received and tried the requested application and/or content.

2. Method according to claim 1, **characterized in that** the modification criteria for the software applications and contents comprise:
- marketing, advertising, business criteria and the like;
- statistical profile criteria about requesting end users in accordance with visited web sites, accessed contents or applications, geographical location, user sex and age, and the like;
- technical criteria for updating and/or improving software application and content versions;
- personalization criteria for the software applications and contents in accordance with requirements expressly entered into the system (1, 2) by the user in question;
- criteria for improving energy consumption in accordance with the type of application and/or content.

3. Method according to claim 1 or 2, **characterized in that** the steps for intercepting (115), analysing (115), modifying (120) and checking (125) the delivery signal (6) including the requested software application and/or content are performed in one or more (13) of a proxy, a gateway, and a filter of the software application and contents distribution system (2).

4. Method according to claim 1 or 2, **characterized in that** the steps for intercepting (115), analysing (115), modifying (120) and checking (125) the delivery signal (6) including the requested software application and/or content are performed in a module included in and/or connected to the software application and content server (3) of the system (2).

5. Method according to one of the previous claims, **characterized in that** the request event (100) for the software applications and/or content is manually or automatically triggered by a user device (4) on behalf of the device itself or of a set of target user devices (4) arranged to receive the respective applications and/or contents.

6. Method according to one of claims 1 to 4, **characterized in that** the request event (100) for software applications and/or contents is triggered by the application and content server (3) of the system (2).

7. Automated, personalized modification system (1) for software applications and contents, as applicable to networks and systems (2) for distributing and delivering software applications and/or contents to end user devices (4), said distribution and delivery systems (2) comprising at least one application and content server (3), and end user devices (4) in communication with said server (3) through a communication network infrastructure, with the application and content server (3) being arranged, upon occurring a request event (100) for software applications and/or contents, to select and send In a delivery signal (6) the respective software applications and/or contents to the respective user device or devices (4), said modification system (1) being **characterized by** comprising
- at least one modification criteria and element database (7);
- analysing means (8) for the delivery signal (6) in connection with the modification criteria and element database (7), arranged to intercept and analyse (115) said signal (6) before delivering thereof to the respective user device or devices (4), such that said analysis (115) makes a decision whether the applications and/or contents included in said signal (6) are to be modified based on the modification criteria in the modification criteria and element database (7), said analysing means (8) being further arranged to report whether modifications must be performed or not to modifying means (9) in an indicating signal;
- modifying means (9) for the delivery signal (6) in connection with, and optionally included in, said analysing means (8), and in connection with the modification criteria and element database (7), arranged to modify (120), upon receiving an indicating signal that modifications must be performed, the applications and/or contents included in said delivery signal (6), before delivering thereof to the respective user device or devices (4), based on corresponding modification elements in the modification criteria and element database (7), and to store information about said modification results into a result database (11);
- at least one result database (11) arranged to store i) information about modification results, and ii) information about incompatibility or operation error responses sent by user devices (4) receiving modified software applications and/or contents;
- examining means (12) for modifications in connection with, and optionally included in, the modifying means (9), and in connection with the result database (11), arranged to determine possible incompatibilities, of the modified applications and/or contents, with respect to the requesting user device or devices (4).

8. Modification system (1) for software applications and contents according to claim 7, **characterized in that** the modification criteria and element database (7) for software applications and contents is arranged to store modification criteria comprising:
- marketing, advertising, business criteria and the like:
- statistical profile criteria about requesting end users in accordance with visited web sites, accessed contents or applications, geographical location, user sex and age, and the like;
- technical criteria for updating and/or improving software application and content versions;
- personalization criteria for the software applications and contents in accordance with requirements expressly entered into the system (1, 2) by the user in question;
- criteria for improving energy consumption in accordance with the type of application and/or content.

9. Modification system (1) for software applications and contents according to claim 7 or 8, **characterized in that** the analysing means (8) for the delivery signal (6), the modifying means (9) for the delivery signal (6), the examining means (12) for modifications, the modification criteria and element database (7) and the result database (11) are connected to, and optionally comprised in, one or more (13) of a proxy, a gateway, and a filter of the software application and contents distribution system (2).

10. Modification system (1) for software applications and contents according to claim 7 or 8, **characterized in that** the analysing means (8) for the delivery signal (6), the modifying means (9) for the delivery signal (6), the examining means (12) for modifications, the modification criteria and element database (7) and the result database (11) are connected to, and optionally comprised in, the software application and content server (3) of the distribution system (2).

11. Modification system (1) for software applications and contents according to one of claims 7 to 10, **characterized in that** the analysing means (8) for the delivery signal (6), the modifying means (9) for the delivery signal (6), the examining means (12) for modifications, the modification criteria and element database (7) and the result database (11) are arranged to process delivery signals (6) comprising software applications and/or contents requested through a request event (100) manually or automatically triggered by a user device (4) on behalf of the device itself or of a set of target user devices (4) arranged to receive the respective applications and/or contents.

12. Modification system (1) for software applications and contents according to one of claims 7 to 10, **characterized in that** the analysing means (8) for the delivery signal (6), the modifying means (9) for the delivery signal (6), the examining means (12) for modifications, the modification criteria and element database (7) and the result database (11) are arranged to process delivery signals (6) comprising software applications and/or contents requested through a request event (100) triggered by the application and content server (3) of the distribution system (2).

13. Modification system (1) for software applications and contents according to one of claims 7 to 12, **characterized in that** the user devices (4) comprise mobile phones, PDA devices, videogame consoles, smart phones, multimedia players, computers, and set-top boxes.

## Amended claims

### Amended claims in accordance with Rule 137(2) EPC.

**1.** Automated, personalized modification method for software applications and contents, as applicable to networks and systems (2) for distributing and delivering software applications and/or contents to end user devices (4) after manual or automated request events (100) for each respective software application or content, which comprises, based on criteria defined in system (2), automatically modifying said respective software application or content to be delivered to an end user or users, comprising said method the steps of:
- sending (100) by at least one user device (4) a request for a software application and/or content to an application and content server (3) of said distribution system or network (2);
- receiving (105) the request and making a decision (105), by the application and content server (3), whether to send or not the requested application and/or content to the user device (4);
- if the server (3) makes a decision (105) to send the requested application and/or content, they are attached (110) to a delivery signal (6) terminating in the requesting user device (4); and
said method being **characterized in that** modification criteria and elements for requested software applications and/or contents are occasionally and/or periodically stored into a modification criteria and element database (7) connected to, and optionally included in, the system (2) and **in that** before delivering (130, 135) the delivery signal (6) to the corresponding user device (4):
- intercepting and analysing (115) said delivery signal (6) to make a decision whether the application and/or content included therein must be modified before delivering them to the requesting user device (4), with said decision based on the above mentioned modification criteria;
- if the decision is made to modify the application and/or content, proceeding to modifying (120) thereof with the said modification elements corresponding to the previously used modification criteria:
- checking (125) the modified application and/or content against previous results stored into a result database (11) to determine possible incompatibilities, for said modified application and/or content with respect to the user device (4);
- if no incompatibility is determined, sending (130) the delivery signal (6) with the modified application and/or content to the requesting user device (4); otherwise, if any incompatibility is determined, sending (135) the requesting user device (4) the delivery signal (6) with the unmodified application and/or content; and
- storing (1A) into the result database (11) possible incompatibility or operation error responses for the delivered application and/or content, being sent by the requesting user device (4) once it has received and tried the requested application and/or content.

**2.** Method according to claim 1, **characterized in that** the modification criteria for tho software applications and contents comprise:
- marketing, advertising, business criteria and the like;
- numerical values derived from statistical profiles about requesting end users in accordance with visited web sites, accessed contents or applications, geographical location, user sex and age, and the like;
- technical criteria for updating and/or improving software application and content versions;
- personalization criteria for the software applications and contents in accordance with requirements expressly entered into the system (1, 2) by the user in question;
- criteria for improving energy consumption in accordance with the type of application and/or content.

**3.** Method according to claim 1 or 2, **characterized in that** the steps for intercepting (115), analysing (115), modifying (120) and checking (125) the delivery signal (6) including the requested software application and/or content are performed in one or more (13) of a proxy, a gateway, and a filter of the software application and contents distribution system (2).

**4.** Method according to claim 1 or 2, **characterized in that** the steps for intercepting (115), analysing (116), modifying (120) and checking (126) the delivery signal (6) including the requested software application and/or content are performed in a module included in and/or connected to the software application and content server (3) of the system (2).

**5.** Method according to one of the previous claims, **characterized in that** the request event (100) for the software applications and/or content is manually or automatically triggered by a user device (4) on behalf of the device itself or of a set of target user devices (4) arranged to receive the respective applications and/or contents.

**6.** Method according to one of claims 1 to 4, **characterized in that** the request event (100) for software applications and/or contents is triggered by the application and content server (3) of the system (2).

**7.** Automated, personalized modification system (1) for software applications and contents, as applicable to networks and systems (2) for distributing and delivering software applications and/or contents to end user devices (4), said distribution and delivery systems (2) comprising at least one application and content server (3), and end user devices (4) in communication with said server (3) through a communication network infrastructure, with the application and content server (3) being arranged, upon occurring a request event (100) for software applications and/or contents, to select and send in a delivery signal (6) the respective software applications and/or contents to the respective user device or devices (4), said modification system (1) being **characterized by** comprising:
- at least one modification criteria and element database (7);
- analysing means (8) for the delivery signal (6) in connection with the modification criteria and element database (7), arranged to intercept and analyse (115) said signal (6) before delivering thereof to the respective user device or devices (4), such that said analysis (115) makes a decision whether the applications and/or contents included in said signal (6) are to be modified based on the modification criteria in the modification criteria and element database (7), said analysing means (8) being further arranged to report whether modifications must be performed or not to modifying means (9) in an indicating signal;
- modifying means (9) for the delivery signal (6) in connection with, and optionally included in, said analysing means (8), and in connection with the modification criteria and element database (7), arranged to modify (120), upon receiving an indicating signal that modifications must be performed, the applications and/or contents included in said delivery signal (6), before delivering thereof to the respective user device or devices (4), based on corresponding modification elements in the modification criteria and element database (7), and to store information about said modification results into a result database (11);
- at least one result database (11) arranged to store i) information about modification results, and ii) information about incompatibility or operation error responses sent by user devices (4) receiving modified software applications and/or contents;
- examining means (12) for modifications in connection with, and optionally included in, the modifying means (9), and in connection with the result database (11), arranged to determine possible incompatibilities, of the modified applications and/or contents, with respect to the requesting user device or devices (4).

**8.** Modification system (1) for software applications and contents according to claim 7, **characterized in that** the modification criteria and element database (7) for software applications and contents is arranged to store modification criteria comprising:
- marketing, advertising, business criteria and the like;
- statistical profile criteria about requesting end users in accordance with visited web sites, accessed contents or applications, geographical location, user sex and age, and the like;
- technical criteria for updating and/or improving software application and content versions;
- personalization criteria for the software applications and contents in accordance with requirements expressly entered into the system (1, 2) by the user in question;
- criteria for improving energy consumption in accordance with the type of application and/or content.

**9.** Modification system (1) for software applications and contents according to claim 7 or 8, **characterized in that** the analysing means (8) for the delivery signal (6), the modifying means (9) for the delivery signal (6), the examining means (12) for modifications, the modification criteria and element database (7) and the result database (11) are connected to, and optionally comprised in, one or more (13) of a proxy, a gateway, and a filter of the software application and contents distribution system (2).

**10.** Modification system (1) for software applications and contents according to claim 7 or 8, **characterized in that** the analysing means (8) for the delivery signal (6), the modifying means (9) for the delivery signal (6), the examining means (12) for modifications, the modification criteria and element database (7) and the result database (11) are connected to, and optionally comprised in, the software application and content server (3) of the distribution system (2).

**11.** Modification system (1) for software applications and contents according to one of claims 7 to 10, **characterized in that** the analysing means (8) for the delivery signal (6), the modifying means (9) for the delivery signal (6), the examining means (12) for modifications, the modification criteria and element database (7) and the result database (11) are arranged to process delivery signals (6) comprising software applications and/or contents requested through a request event (100) manually or automatically triggered by a user device (4) on behalf of the device itself or of a set of target user devices (4) arranged to receive the respective applications and/or contents.

**12.** Modification system (1) for software applications and contents according to one of claims 7 to 10, **characterized in that** the analysing means (8) for the delivery signal (6), the modifying means (9) for the delivery signal (6), the examining means (12) for modifications, the modification criteria and element database (7) and the result database (11) are arranged to process delivery signals (6) comprising software applications and/or contents requested through a request event (100) triggered by the application and content server (3) of the distribution system (2).

**13.** Modification system (1) for software applications and contents according to one of claims 7 to 12, **characterized in that** the user devices (4) comprise mobile phones, PDA devices, videogame consoles, smart phones, multimedia players, computers, and set-top boxers.
